# EUROPEAN PATENT APPLICATION

(11) **EP 3 842 884 A1**
(43) Date of publication of application: **30.06.2021**
(21) Application number: 19219220.1
(22) Date of filing: 23.12.2019
(51) Int. Cl.: G05B 23/02, H02J 13/00

(54) **SYSTEM FOR MONITORING AND DIAGNOSING EVENTS**

(71) Applicant: ABB Power Grids Switzerland AG, 5400 Baden (CH)
(72) Inventor: Orkisz, Michal, 31-352 Krakow (PL); Prescher, Martin, 771 35 Ludvika (SE)
(74) Representative: Epping - Hermann - Fischer

(57) **Abstract**

The invention relates to the field of monitoring and diagnostic systems of industrial facilities, especially facilities of a power system, where the large amounts of data need to be reviewed and analysed. A system according to the invention comprises a graphical user interface configured to display the data in a first view in the form of a first chart and in a second view in the form of a second chart, wherein the information indicating severity of events is registered in a quantified manner and into several classes, and wherein the events displayed by the graphical user interface in any of the first or the second view are displayed colour-coded accordingly to their severity, and wherein the events displayed by the graphical user interface in any of the first or the second view are displayed in the form of a coloured rectangles.

## Description

### Technical field

The invention relates to the field of monitoring and diagnostic systems of industrial facilities, especially facilities of a power system, where the large amounts of data need to be reviewed and analysed.

### Background art

HVDC (High Voltage Direct Current) is a cutting-edge technology serving to transmit large quantities of electrical power over long distances over land and under the sea in a way that gets around many problems common with Alternating Current transmission. HVDC stations are very reliable, nevertheless, many small anomalies could be taking place within the station, which, if ignored, could lead to very undesirable station trips. A lot of information is generated at the station, e.g., in the form of event logs, so it is easy to overlook small anomalies, which have a potential of developing into larger problems. The FACTS (Flexible Alternating Current Transmission Systems) often share the same control technology with HVDC stations. During normal and abnormal operation of HVDC (and FACTS) stations multiple events are generated by the control system. The events can be quite numerous (even up to a million per year). It is impractical even for a most skilful expert, to examine all of them. Yet the information contained in event logs can shed important light on the operation of the station.

Systems for monitoring and diagnosing events are known in the state of art - e.g. from the document US2015293685A1 there is known such system with a graphical user interface, where the data is presented in the form of time-correlated tables. While such data-representation can be helpful in many situations, it is unsuitable for doing a quick visual/graphical analysis in order to recognize possible patterns of events.

### Summary of the invention

The objective of this invention is therefore to help in analysing the history of events, in order to recognize some recurring patterns and notice unusual behaviour.

According the present invention there is provided a system for monitoring and diagnosing events relating to operation of a station in a power system, the system comprising:
- a High Voltage Direct Current (HVDC) station and/or a Flexible Alternating Current Transmission System (FACTS) station, provided with a plurality of devices and/or sensors that produce signals relating to their operation,
- an interface arranged and configured for receiving and storing data from the abovementioned signals in the form of a first database,
- a processor arranged and configured for automatically comparing the data from the first database with a predetermined set of rules to identify certain types events and their severity, and for registering identified events together with the information indicating the severity of such events in a second database,
- a graphical user interface (GUI) arranged and configured for displaying the data from the second database in a time-correlated form,
wherein the graphical user interface is configured to display the data from the second database in two main views:
a first view, where the data from the second database is presented in the form of a first chart, where the horizontal axis represents a day on which a certain event occurred, the time on the horizontal axis being presented in a quantified manner, while the vertical axis represents an hour during which a certain event occurred, the time on the horizontal axis being represented in a continuous manner, wherein events of different types from each day are marked in parallel to each other within a range corresponding to that single day on a horizontal axis, and
a second view, where the data from the second database is presented in the form of a second chart, where the horizontal axis represents the time on which a certain event occurred, the time on the horizontal axis being represented in a continuous manner, while the vertical axis represents certain types of events and/or groupings of certain types of events, the events and/or groupings of events on vertical axis being presented in a quantified manner,
wherein the information indicating severity of events is registered in the second database in a quantified manner and into several classes,
and wherein the events displayed by the graphical user interface in any of the first or the second view are displayed colour-coded accordingly to their severity,
and wherein the events displayed by the graphical user interface in any of the first or the second view are displayed in the form of a coloured rectangles.

Even though it has been indicated that there is a first database and a second database, it is obvious that the data can be registered in a single (possibly more complicated) database. In a real-life embodiment, the first database and the second database may be comprised in a single drive unit (e.g. HDD or SSD drive or similar), or they can be comprised in a multiple of drive unit, or even the whole database or parts of it may be comprised in the cloud.

Preferably, the graphical user interface, in the second view, is configured to enable or disable displaying particular events or groupings of events.

Preferably, the severity of events is registered in four classes, correspondingly to their importance to the operation of HVCD and/or FACTS station, e.g. registered as one of: normal, minor, alarm, critical.

Preferably, the severity of events is displayed by the graphical user interface such that normal events are displayed as blue-coloured rectangles, minor events are displayed as green-coloured rectangles, alarm events are displayed as yellow-coloured rectangles, critical events are displayed as red-coloured rectangles.

Preferably, the graphical user interface is further configured to, upon the user selecting to display events from only one class of severity, display coloured rectangles relating to the selected class of severity while making invisible or displaying in the palette of grey and/or black rectangles relating to the events with severity different from the selected class.

Preferably, the system is further configured to, upon the user selecting a type of event to be displayed by the GUI that in the name of the event contains a certain string of characters, display by the GUI only color-coded rectangles that in the name of the event contain the abovementioned string of characters.

Preferably, the system is further configured to allow the user to change the resolution of the horizontal axis of the first chart or the second chart, that is displayed by the GUI in the first view or the second view, respectively.

Preferably, the system is further configured to allow the user to choose the time range on the horizontal axis of the data from the second database to be displayed by the GUI, especially by the way of manual input of the time range or by responding to the users input via a predetermined action of a dedicated button or a wheel-like device, e.g. a scroll-wheel of a mouse.

Preferably, the system is further configured to perform an automatic analysis of the data registered in the second database and according to a predetermined set of rules classify certain periods of time by additional indicators, the indicators correlating to predetermined groups of events registered in the second database, wherein the GUI is configured to display the abovementioned indicators correspondingly to the periods of time they relate to.

With the invention, it is possible to make it easier to analyse the state of facilities, that are very important for the power system, to notice/mark long-term problems occurring at the facility, assess the effectiveness of repairs and maintenance actions, search for particular events or even to provide diagnosis of the facility faster. The invention is also allowing to manufacturers of such facilities to guarantee that the equipment will be longer lasting and maintenance costs will be reduced.

### Brief description of drawings

The present invention will be further described in more detail with reference to the accompanying drawing, in which:
Fig. 1 presents an exemplary view of the first type of view displayed by the GUI,
Fig. 2 presents an exemplary view of the second type of view displayed by the GUI, with small range of time displayed on the horizontal axis,
Fig. 3 presents an exemplary view of the second type of view displayed by the GUI, with a time range displayed on the horizontal axis of about 5 years, and
Fig. 4 presents an exemplary view of the second type of view displayed by the GUI, with only events of one class of severity displayed.

### Detailed description of preferred embodiments

The subject of this invention is a system and a method for analysis of HVDC station events. This invention describes a tool for examining HVDC (and FACTS) control system event logs. The event logs contain information about normal and abnormal operation of the station. Often the events occur in a series closely spaced in time. The events may be classified by the control system as Normal, Minor, Alarm and Critical. This classification helps to assess the severity of a sequence of events: e.g., a sequence containing a critical event is more serious than one with only Normal and Minor events. The tool displays the criticality as color-coded.

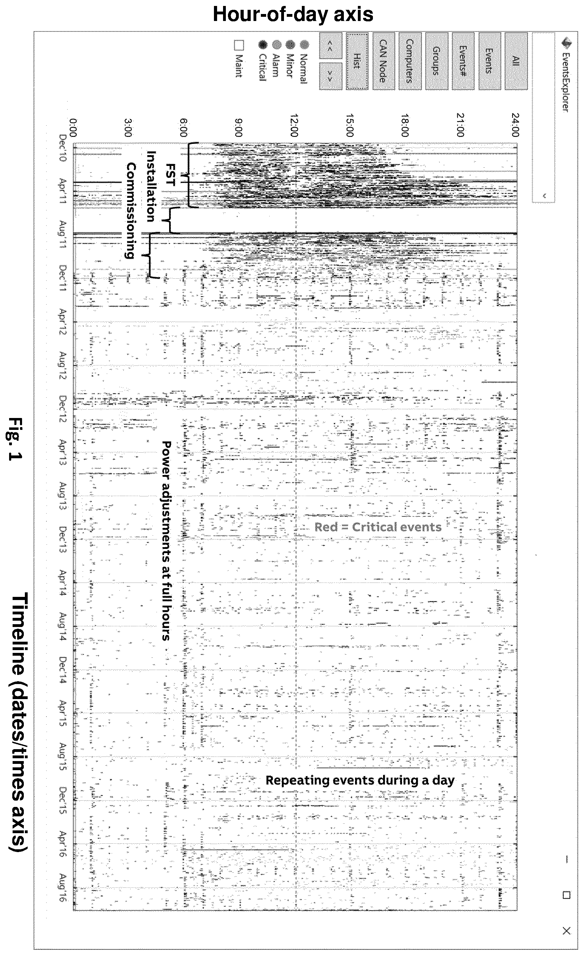

Two views of the event data are provided. In both cases the horizontal axis corresponds to the time of the event (e.g., the day). In the first case the vertical axis represents the time of the day (Figure 1). Each rectangle's intensity corresponds to the number of events that have occurred on the specific day (horizontal axis) at the specific hour (or its fraction - on the vertical axis) This representation helps in identifying several different patterns in the data. One pattern is related to different periods of activity in the history of the station, such as Factory System Tests, installation, commissioning, regular operation and periodic maintenance. Second detectable pattern is events that repeat at the same time every day, e.g., changing the station's power levels on full hours. Another discernible pattern contains long sequences of events that happen at a given day for extended periods of time. These may be signs of some trouble, especially if their severity is elevated.

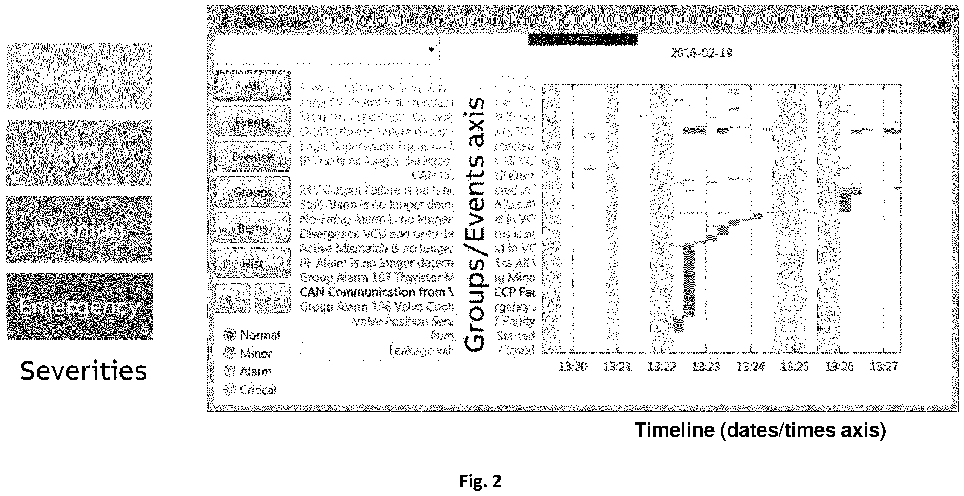

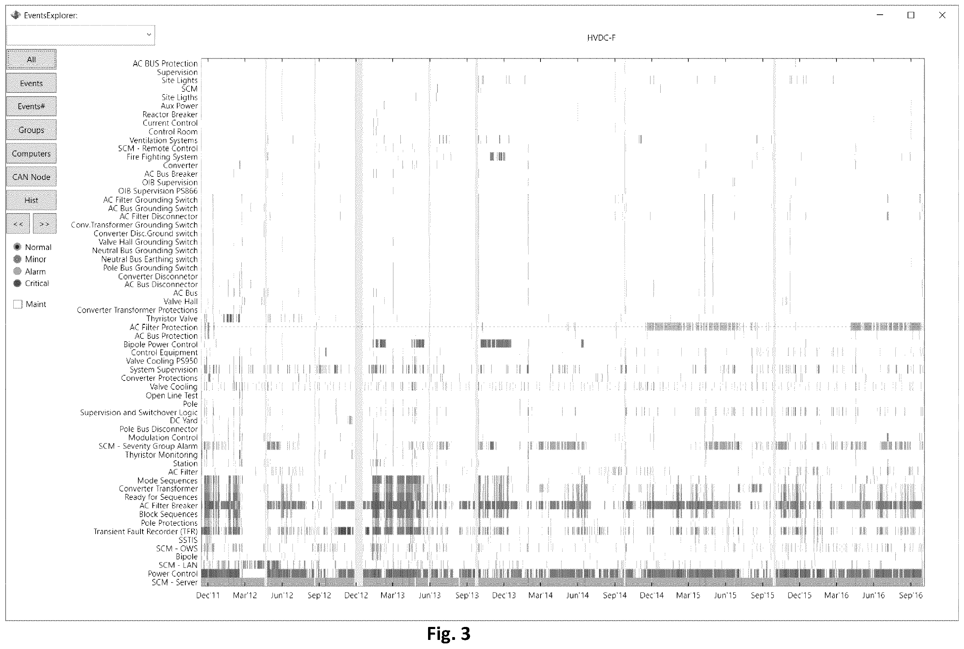

Another useful representation (Figures 2-4) shows on the vertical axis the types of events or the groupings of events. Each rectangle corresponds to the most severe events from a particular event group occurring on a given day (or another time interval). This view helps to see, for example, during which season of the year a particular event tends to repeat. It also allows to notice events that occur regularly, e.g., switching of pumps every two weeks. Another information that can be gained from this view is the correlations between occurrences of different events. If a maintenance action reduced the number of unwanted events, this will also be visible on the plot.

As many types of events may have both ON and OFF components, they can be displayed in two ways: either each ON and OFF switch is treated as a separate instantaneous event, or a Gantt-chart-like bar representation can signal the start (ON) and the stop (OFF) of the event. This second representation may be useful to determine the simultaneity of event states (e.g., an alarm occurred when the ground switch was ON).

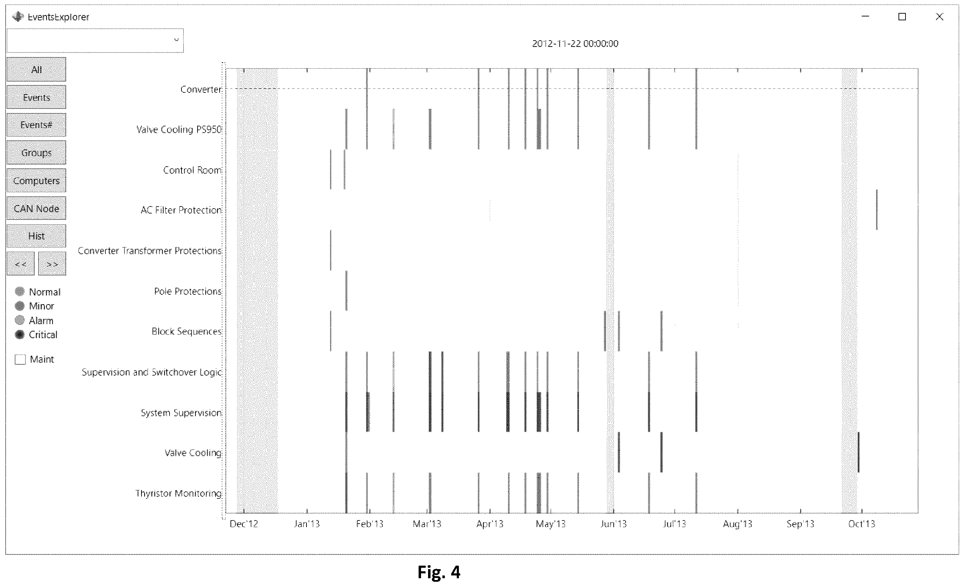

Various modes for grouping of events are available. For example, events can be grouped by the machine at which they originated, by the CAN node, by severity (e.g., Figure 4), by system applications where the events originated, etc.

Filtering is advantageously provided for different groupings, for example by sub-string searching (e.g., find all events that contain the substring "Valve"). A number of filters has been pre-defined, others can be entered manually.

There are several ways to zoom and un-zoom the display in order to examine the events at various time scales (from years to milliseconds).

Tooltips are provided that display a summary information about the event under the mouse pointer, or about the corresponding date and time.

Automatic classification of days can be further provided to ease the browsing by automatically classifying the days as, e.g., Normal, Commissioning, Periodic Maintenance, Unusual... Multiple indicators can be used to arrive at such classification, e.g., looking at time slots that exceed a certain number of events, or have a large number of event types occurring simultaneously.

Besides the events, other data related to the operation of the station may be available with similar time stamps. This includes triggered Transient Fault Recorders (TFR's) which save the short-time history of multiple signals. Trends of measured signals may be recorded as well. Given the large amount of available TFR and trend data, it may be difficult to cross-reference their occurrences with each other and with the logged events. The described tool provides a possible way to navigate and to correlate them.

Preferably, the data gathered and analysed by the system according to the invention is further automatically analysed to provide additional insight into the state or operation history of a facility equipped with the system for monitoring and diagnosing.

Firstly, the data can be analysed to classify the days according to the types and quantity of events that were recognized. Therefore, some days with the facility operating and no unusual events occurring can be classified as 'normal' days. Other days, when the system recognizes planned service activities, can be classified as 'maintenance' days. Yet other days, when the facility is experiencing unusual, unexpected or excessively frequent problems, can be classified as 'abnormal'.

Secondly, the data can be further clustered/grouped based on the similarities in possible patterns of sequences of recognized events in given time-frame, especially for each separate day.

Thirdly, the system can be configured to automatically determine the probability of predefined errors/events, based on the similarities to such already recognized errors/events.

Furthermore, the data can be further analysed to cluster/group types of events based on when did they occur. The system may be configured to analyse whether there are typical patterns in the occurrence of events (one type of events occurring usually before the other type of events), to indicate possible cause-effect relationship between different types of events.

Moreover, the system may be further configured to analyse and cross-correlate data from two redundant control systems from the same facility, e.g. to recognize how a specific type of event is registered by different sensors etc.

The system may be further configured for automatically performing an analysis and prepare a time-related statistics for a pre-defined periods of time, e.g. daily, weekly, monthly, yearly statistics, e.g. of the frequency that that specific types of events occurred (like a minimum / maximum frequency of occurrence) or for how long they were occurring/repeating.

Within said further automatically performed analysis, the system may also prepare a further analysis by determining the state of the facility based on the events that were occurring in a given period of time, e.g. determining if the facility was in a 'running', 'standby' or 'idle' state and further calculating how long did the facility spend in such a state (e.g. in the form a fraction of the whole period of time).

The data can be also analysed by the system to determine how frequently certain events occur and indicate the most frequent ones. Apart from that, the system may also be configured to analyse and indicate whether a certain event (e.g. error) occurred during the time when the facility was operating or when operation of the facility was halted.

Also, the system may be further configured to analyse, whether a certain type of events (e.g. errors) started to occur more often (indicating worsening the state of facility) or the contrary - that certain type of event (e.g. error) stopped occurring (indicating improvement in the state of the facility).

## Claims

1. A system for monitoring and diagnosing events relating to operation of a station in a power system, the system comprising:
- a High Voltage Direct Current (HVDC) station and/or a Flexible Alternating Current Transmission System (FACTS) station, provided with a plurality of devices and/or sensors that produce signals relating to their operation,
- an interface arranged and configured for receiving and storing data from the abovementioned signals in the form of a first database,
- a processor arranged and configured for automatically comparing the data from the first database with a predetermined set of rules to identify certain types events and their severity, and for registering identified events together with the information indicating the severity of such events in a second database,
- a graphical user interface (GUI) arranged and configured for displaying the data from the second database in a time-correlated form,
wherein the graphical user interface is configured to display the data from the second database in two main views:
a first view, where the data from the second database is presented in the form of a first chart, where the horizontal axis represents a day on which a certain event occurred, the time on the horizontal axis being presented in a quantified manner, while the vertical axis represents an hour during which a certain event occurred, the time on the horizontal axis being represented in a continuous manner, wherein events of different types from each day are marked in parallel to each other within a range corresponding to that single day on a horizontal axis, and
a second view, where the data from the second database is presented in the form of a second chart, where the horizontal axis represents the time on which a certain event occurred, the time on the horizontal axis being represented in a continuous manner, while the vertical axis represents certain types of events and/or groupings of certain types of events, the events and/or groupings of events on vertical axis being presented in a quantified manner,
wherein the information indicating severity of events is registered in the second database in a quantified manner and into several classes,
and wherein the events displayed by the graphical user interface in any of the first or the second view are displayed colour-coded accordingly to their severity,
and wherein the events displayed by the graphical user interface in any of the first or the second view are displayed in the form of a coloured rectangles.

2. The system according to claim 1, **wherein** the graphical user interface, in the second view, is configured to enable or disable displaying particular events or groupings of events.

3. The system according to claim 1 or 2, **wherein** the severity of events is registered in four classes, correspondingly to their importance to the operation of HVCD and/or FACTS station, e.g. registered as one of: normal, minor, alarm, critical.

4. The system according to claim 3, **wherein** the severity of events is displayed by the graphical user interface such that normal events are displayed as blue-coloured rectangles, minor events are displayed as green-coloured rectangles, alarm events are displayed as yellow-coloured rectangles, critical events are displayed as red-coloured rectangles.

5. The system according to claim 4, **wherein** the graphical user interface is further configured to, upon the user selecting to display events from only one class of severity, display coloured rectangles relating to the selected class of severity while making invisible or displaying in the palette of gray and/or black rectangles relating to the events with severity different from the selected class.

6. The system according to any of the proceeding claims 1, 2, 3, 4 or 5, **wherein** it is further configured to, upon the user selecting a type of event to be displayed by the GUI that in the name of the event contains a certain string of characters, display by the GUI only color-coded rectangles that in the name of the event contain the abovementioned string of characters.

7. The system according to any of the proceeding claims 1, 2, 3, 4, 5 or 6, **wherein** it is further configured to allow the user to change the resolution of the horizontal axis of the first chart or the second chart, that is displayed by the GUI in the first view or the second view, respectively.

8. The system according to any of the proceeding claims 1, 2, 3, 4, 5, 6 or 7, **wherein** it is further configured to allow the user to choose the time range on the horizontal axis of the data from the second database to be displayed by the GUI, especially by the way of manual input of the time range or by responding to the users input via a predetermined action of a dedicated button or a wheel-like device, e.g. a scroll-wheel of a mouse.

9. The system according to any of the proceeding claims 1, 2, 3, 4, 5, 6, 7 or 8, **wherein** it is further configured to perform an automatic analysis of the data registered in the second database and according to a predetermined set of rules classify certain periods of time by additional indicators, the indicators correlating to predetermined groups of events registered in the second database, wherein the GUI is configured to display the abovementioned indicators correspondingly to the periods of time they relate to.
